# EUROPEAN PATENT SPECIFICATION

(11) **EP 3 867 516 B1**
(45) Date of publication and mention of the grant of the patent: **10.06.2026**
(21) Application number: 19873700.9
(22) Date of filing: 17.10.2019
(51) Int. Cl.: F02M 37/04, B60K 15/03, B62J 35/00, B62M 7/02, F02M 37/00, F02M 37/10, B62J 37/00, F02M 37/14

(54) **FUEL PUMP LAYOUT**
ANORDNUNG EINER BRENNSTOFFPUMPE
DISPOSITION DE POMPE À CARBURANT

(30) Priority: 17.10.2018 IN 201841039371
(43) Date of publication of application: 25.08.2021
(73) Proprietor: TVS Motor Company Limited, Chennai 600006 (IN)
(72) Inventor: T, DEEPAN, Chennai 600006 (IN); RAMESH, Vaidheeswaran, Chennai 600006 (IN); VENKATA MANGA RAJU, Karnam, Chennai 600006 (IN); DHILIP KUMAR, R, Chennai 600006 (IN)
(74) Representative: Patentanwaltskanzlei Matschnig & Forsthuber OG
(86) International application number: PCT/IN2019/050769
(87) International publication number: WO 2020/079709

(56) References cited:
- JP-A- 2011 063 045
- JP-A- 2013 124 070
- US-A1- 2002 038 653
- US-A1- 2007 216 151
- US-A1- 2007 216 151
- US-B2- 7 401 597

## Description

### TECHNICAL FIELD

The present subject matter relates to a saddle type vehicle. More particularly, the present subject matter relates to the mounting of fuel pump module on the wall of the fuel tank inner portion of a vehicle.

### BACKGROUND

Saddle type vehicles are basically one of the most affordable and popular kind of the vehicle among the world's population. These kind of vehicles are mostly powered by the two stroke or four stroke engines or hybrid power trains. Conventionally carburetor type system has been implemented in vehicles for supplying & metering fuel quantity to the engine. With need to enhance performance, power output & efficiency of same engine as well as reduce emissions, fuel injection system has become popular in saddle type vehicles, albeit at cost impact. Thus, a fuel management system is implemented in vehicles to control the fuel being supplied to the engine at right time & in right quantity. Often with vehicles being commercialized for use in multiple markets & variety of users, depending on the market needs, vehicle manufacturers often face a challenge of handling variety of fuel supply system for same vehicle with variant of carburetor system vis-à-vis fuel injection system. There also exists a problem of different layout of same vehicle for 2 types of fuel systems as it associated issues of logistics, procurement, supply chain & assembly difficulties to swap between the two types of systems. The fuel management system of the internal combustion engine has to use the combination of fuel tank along with the fuel pump module disposed in the tank to deliver fuel in the engine with the help of the fuel injector. The vehicle fuel system is responsible for delivering the right amount of fuel from a fuel tank to the fuel injector, to maintain an appropriate amount of fuel in the engine for the process of internal combustion. The primary function of the fuel injector is to inject appropriate quantity/ quality of fuel into the engine.

A carburetor is recognized as precise device for adjusting an air/fuel mixture, however it is too complicated to accurately perform some of the precise adjustments needed in supplying fuel to the engine and monitor the changes in air or fuel temperature or atmospheric pressure. Hence, the main disadvantages of the carburetor spark ignition engine are its non-uniform distribution of mixture in multi cylinder engines and hence loss of thermal efficiency.

In order to address the shortcomings of the conventional carburetor system, an Electronic Fuel Injection System or EFI has been developed as an improvement over the carburetor in order to calibrate and optimize the fuel/air ratio. Also, carburetor has open loop system, whereas EFI has closed loop system. The electronic fuel injection system or EFI is utilized to better control fuel to air ratios in order to provide better performance, improve emissions and drivability. Moreover, the need of precise fuel supply creates a necessity for introduction of Electronic Fuel Injection (EFI) system in existing carburetor vehicles.

Generally, the typical electronic fuel injection system comprises a fuel tank, a fuel pump that is operatively coupled to the fuel tank that directs fuel into the engine. Further, as an improvement over the carburetor, the Electronic Fuel Injection system (EFI) utilizes advanced electronic techniques to adjust the air fuel mixture. Hence, as engines moved away from carburetors and towards fuel injection, the conversion of the carburetor to the Electronic Fuel Injection system (EFI) involves different types of electrical and mechanical modifications in the vehicle. In known art the fuel pump module is typically disposed inside the fuel storage unit which is also referred as fuel tank. Although, there are two ways to mount fuel pump in fuel tank that is outside the fuel tank or inside the fuel tank but the major problem is that the fuel pump cannot be packaged outside the fuel tank because of the space constraints in the installation space in the layout. Generally, a fuel pump module is considered to be the precise device for maintaining the flow of appropriate amount of the fuel to engine with the help of fuel injector, however it is practically difficult to completely use the fuel present in tank (left over unusable fuel is referred to as dead volume) through the pump disposed in the fuel tank. Hence, the main disadvantage of the fuel pump module disposed in the fuel tank is not utilizing the fuel to its minimum level present in the bottom surface of the fuel tank. Additionally, fuel tank design becomes laborious when the pump is placed inside the fuel tank. Also, such disposition results in change in design or change in location of neighboring parts in the complex layout, thereby increasing cost, lead time for change over as well as more variety in parts. Fuel pump packaging inside the fuel tank needs lots of changes in the existing layout and it is very complex to package it inside the fuel tank as the interference with the neighboring parts like main tube frame, canister, wiring harness etc. occurs, which results in change in design or change in location of neighboring parts in the complex layout. Therefore, it is a challenge to package the fuel pump module inside the fuel tank module without adversely affecting layout, shape & space or with minimal changes in the existing layout. Additional problems arise in terms of enabling a robust construction for the fuel pump module when one attempts to dispose in within the fuel tank. The sealing function of the module is also critical to achieve good performance.
In US2007/0216151A1, a fuel pump mounting structure which has an opening in a side surface or a bottom surface of a fuel tank is disclosed. A fuel pump assembly including a cylindrical pump body and a filter connected to a suction side of the pump body is accommodated in a space located inside of the opening. A flange section of a housing that encloses the pump body engages an outside surrounding area of the opening. A mounting plate covers the outside of the flange section. The fuel pump assembly is fixed to the opening through the flange section and the mounting plate. The axis of the pump body extends generally parallel to a mounting surface of the mounting plate, and the pump body and the filter overlap each other relative to a position in a direction of the axis. The mounting structure reduces the moment against the mounting plate, reliably supports the fuel pump under a stable condition without requiring a large and rigid construction and improves the seal with the fuel tank.
In JP2013-124070A, a fuel filter arranging structure of a saddle-riding type vehicle is disclosed. Such fuel filter arranging structure has a filter installing opening that is formed in an upper cover plate for covering an upper surface of a bottom plate of a fuel tank, and a high pressure side fuel filter is detachably installed in an opening outer peripheral part of the filter installing opening in a state of being inserted into the inside of the fuel tank from the filter installing opening. The objective of this prior art is to provide a fuel filter arranging structure of a saddle-riding type vehicle for facilitating arrangement design for arranging a high pressure side fuel filter by avoiding interference with the other part and an enlargement of a vehicle body.
In JP2011-063045A, a motorcycle is disclosed which includes a vehicle body frame having a pair of right and left main frames extending backward from the head pipe, a fuel tank supported astride the main frames and stored with the main frames in a recessed part formed by a bottom wall and right and left suspension parts overlapped with the main frames in a side view, and a swelling part swelling a center of a rear part of the bottom wall of the fuel tank downward. An insertion port and a flange mounting seat are provided at a bottom part of the swelling part. A flange of a pump assembly is fixed to the flange mounting seat. The flange mounting seat of the swelling part is arranged so that at least a part may be overlapped with the main frames in a side view.
In US2002/0038653A1 , a fuel supply system for a vehicle is provided with a fuel pump disposed in a fuel tank sitting astride a vehicle body frame. The fuel pump is disposed along a side surface of the fuel tank in a position opposed to a portion of the vehicle body frame. This fuel supply system for a vehicle provides a system in which a fuel pump can be disposed even in a fuel tank of a saddle-ridden vehicle with minimum modifications required in size and shape.

In order to overcome the disadvantages of the conventional method, the fuel pump module disposed in the fuel tank with different solution is developed as an improvement in order to support the fuel pump module under a stable condition without requiring a large and firm construction and also to improve the sealing function which results in better performance.

Typically, for disposing the fuel pump module into the fuel tank, the modification of the fuel tank becomes imminent. As explained in the prior art, the fuel pump module is mounted in the area of side or bottom wall means as on the horizontal and vertical plane. The fuel pump module comprising of the cylinder body and filter coupled with the suction side of the pump body is placed at the fuel tank inner portion, where the cylindrical pump and the filter are arranged to overlap each other. This mounting arrangement is reducing the cantilever effect, reducing the leakage and give support to the mounting of fuel pump module but another aspect like shortening of fuel hose along with wiring harness, and also restricting the water entry in the electrical coupler of fuel pump to avoid short circuit has not been covered in the prior art invention.

Hence, for making the fuel hose along with the wiring harness shorter in length and also to reduce the dead volume in the fuel tank, the changes in the layout of the fuel tank should be done in such a way that there should be minimal changes in the layout of the fuel tank, so that it is not visible to customer. Moreover, as the deposition of fuel in the bottom level of the fuel tank results into unnecessary accumulation of the fuel, loss due to evaporation of fuel takes place, sloshing effect of fuel occurs, so have to place the fuel pump module in such a way that it overcomes all these problems. Also, should result in the ease of accessibility and serviceability and moreover, to convert minimum dead space to installation space. So, it is advisable to have the optimal level of fuel in the fuel tank and for that it is necessary to make some changes in the orientation of the fuel pump module at the fuel tank inner portion for being the assembly rigid enough to withstand the vibrations produced during the fuel pump module operation and also to be leakage proof. Considering the main problem of space constraints in the mounting of fuel pump module in the fuel tank inner portion as the float and float arm in the fuel level sensor is placed in such a way that the wider area is used in this, so, it requires a modified mounting to satisfy all the requirements as discussed above and also to be looked after that there should not be any interference with any part of the fuel tank in addition provides better performance with improved fuel economy.

### BRIEF DESCRIPTION OF THE DRAWINGS

The detailed description is described with reference to the accompanying figures. The same numbers are used throughout the drawings to reference like features and components.
**Fig.1** is a side view of a motorcycle type vehicle as per one embodiment of the present invention.
**Fig.2** is a perspective view of a fuel tank with a fuel pump module disposed in a fuel tank inner portion as per one embodiment of the present invention
**Fig.3** is an inverted view of the fuel tank with a fuel pump module as per one embodiment of the present invention of the present invention.
**Fig. 3a** is a perspective view of mounting plate with a chamfering and mounting holes as per one embodiment of the present invention.
**Fig. 4** is a top view of the fuel tank with respect to the longitudinal axis (SS) of vehicle with a fuel pump module as per one embodiment of the present invention.
**Fig.5** is a longitudinal axis (RR, PP) view of the fuel tank with a fuel pump module disposed in it as per one embodiment of the present invention
**Fig.6** is a longitudinal axis (PP) view of the fuel tank and illustrating the mounting of the fuel pump module to the side wall of the fuel tank inner portion as per one embodiment of the present invention.
**Fig.7** is a perspective view fuel pump module disposed in fuel tank inner portion as per one embodiment of the present invention
**Fig.8** is a longitudinal axis (RR) view of the fuel pump module illustrating at least a filter, at least a fuel outlet port, a fuel hose and an electric connector as per one embodiment of the present invention.
**Fig. 9** is a left hand side view of the fuel tank illustrating mounting of the fuel pump module on the upward rising wall of the said fuel tank inner portion as per another embodiment of the present invention
**Fig. 10** is a left hand side view of the fuel tank inner portion illustrating the mounting of the fuel pump module and the protrusion.
**Fig. 11** is a longitudinal axis (RR) top view of the fuel tank inner portion with a fuel pump module disposed in it at a predetermined angle as per another embodiment of the present invention.

### DETAILED DESCRIPTION

The conventional carburetor fuel systems lack in the several major aspects like poor efficiency in terms of fuel consumption and performance of the engine. Also majorly responsible for the emission of harmful gases which are the main cause for polluting the environment.

A carburetor based fuel system comprises of a fuel tank that is operatively coupled to a fuel cock, which is further coupled to the carburetor in the engine.

As such, a known or the common saddle type vehicles with the carburetor based fuel system comprises of vehicle frame, a driver's seat centrally disposed in the frame, an engine mounted on the frame between the front wheel and a rear wheel axle, a fuel tank and a transmission case disposed rearward of the engine on the respective side of the vehicle frame. The location of carburetor is behind the engine. The fuel tank which is operatively coupled to an electric pump, which is further coupled to the carburetor in the engine.

However, the carburetor based fuel supply system cannot monitor or vary the air to fuel ratio to account for different operating or atmospheric condition. Hence, in order to efficiently control the air fuel ratio and in addition, to provide better performance with improved fuel economy, the existing carburetor vehicles are replaced by the Electronic Fuel Injection (EFI) system.

An EFI system comprises of the fuel tank and an electric pump that is operatively coupled to the fuel tank that directs fuel into the engine. A return line comprising a pressure regulator is directed back to the fuel tank. In an existing electronic fuel injection system, the pressure pump may be inline-type pump or an in-tank type.

Moreover, for mounting the fuel pump module in the fuel tank inner portion, it is needed to provide a structure from which sufficient space can be formed for easy mounting and also for easy access to the fuel pump module. The conventional vehicle body frame comprises a head tube, a main tube extending obliquely downward from an upper portion of the head tube and a pair of laterally spaced left and right upper tubes having a forward end portions fixedly attached to at least a portion of main tube. With the conventional construction of the vehicle body frame, the mounting of the fuel pump module becomes difficult, as in such mounting, the fuel pump module may coincide or foul with at least a portion of the vehicle body. Furthermore, the conventional vehicle body frame comprises of more number of bent portions with at least two cross-members connecting said pair of left and right upper tubes hence making it difficult to mount fuel pump module to the wall of the inner portion of the fuel tank.

Hence, it becomes essential to modify the mounting of the fuel pump module of the saddle type vehicle to facilitate the simple and easy mounting to the wall of the fuel tank inner portion. The present invention provides a solution to the above problems while meeting the requirements of minimum modifications in vehicle from carburetor system to fuel injection system, at low cost with ease of manufacturing etc.

With the above objectives in view, the present invention relates to the electronically controlled fuel injection system, and more particularly to the improved mounting of fuel pump module to wall of the fuel tank which can supply an improved amount of fuel from the fuel tank to the Electronic Fuel Injection (EFI) system with the substantial reduction in the dead volume.

According to one embodiment of the present invention, the fuel pump module is a pump unit arranged to the left side wall of the fuel tank inner portion through at least one mounting member comprising at least a mounting plate, at least a pressure plate, at least a flange and at least a sealing member including rubber seal. As per one embodiment of the present invention, the sealing member provides a high sealing performance for the mounting of fuel pump module to the left side of the wall of the fuel tank inner portion.

The present invention describes the improved layout of mounting of the fuel pump module to the walls of the fuel tank inner portion with less number of parts and components and at same time providing a robust structure.

Further, the vehicle according to the invention comprises the fuel supply system for the saddle type vehicle in which a fuel pump module is disposed to the left side wall of the fuel tank inner portion with its axis generally disposed at the rear mounting of fuel tank, thus the fuel in the fuel tank can be effectively fed by the fuel pump module.

Further, the present invention relates to the improved mounting layout of the fuel pump module in the fuel tank inner portion by securing at least a mounting member to at least a portion of the fuel tank. As per one embodiment of the present invention, the mounting plate is fixedly attached to the wall of the fuel tank inner portion.

According to one embodiment of the present invention, the vehicle body frame includes the head tube, the main tube extending downward from an upper portion of the head tube having a forward end portions fixedly attached to at least a portion of the main tube, a pair of left and right pivot plates connected respectively to rear end portions of the left and right upper tubes and extending downward. As per one embodiment of the present invention, the saddle type vehicle comprises the engine disposed below the main tube and a seat detachably mounted upon said pair of left and right seat rail, the fuel tank being operatively mounted on the vehicle body and the fuel pump module for supplying fuel from the fuel tank to the Electronic Fuel Injection (EFI) system through a fuel hose. As per one embodiment of the present invention, the detachable seat is mounted on the vehicle body frame to the rear of the fuel tank.

As per one embodiment of the present invention, the improved layout of the fuel pump module that is attached to the left side wall of the fuel tank inner portion, slightly inclined towards the rear mounting of fuel tank where the filter portion is touching only fuel tank surface, through at least a mounting plate having machined flat surface area. Thus, providing for better use of the fuel till the bottom surface of the fuel tank thereby minimizing the dead volume.

As per another embodiment of the present invention, the fuel pump module is mounted at an upward rising wall with respect to the rear mounting of fuel tank, forming an angle with the horizontal plane and the longitudinal axis which simplifies the mounting of fuel pump module in the fuel tank. Further, the fuel pump module includes filter which is projected towards the rear mounting of fuel tank for receiving the fuel from the bottom surface of the fuel tank which results to the minimization of dead volume as present in the bottom surface of fuel tank.

It is advantageous to implement the improved layout of the fuel pump module as explained in the present invention inside the fuel tank with the Electronic Fuel Injection System (EFI). The improvement helps in best utilization of the fuel present at the bottom level of the fuel tank.

Various other features of the invention are described in detail below with reference to the accompanying drawings. In the drawings, like reference numbers generally indicate identical, functionally similar, and/or structurally similar elements. The drawing in which an element first appears is indicated by the leftmost digit(s) in the corresponding reference number. With reference to the accompanying drawings, wherein the same reference numerals will be used to identify the same or similar elements throughout the several views.

Further "front" and "rear", and "left" and "right" referred to in the ensuring description of the illustrated embodiment refer to front and rear, and left and right directions as seen in a state of being seated on a seat of the saddle type vehicle. Furthermore, a longitudinal axis refers to a front to rear axis relative to the vehicle, while a lateral axis refers to a side to side, or left to right axis relative to the vehicle.

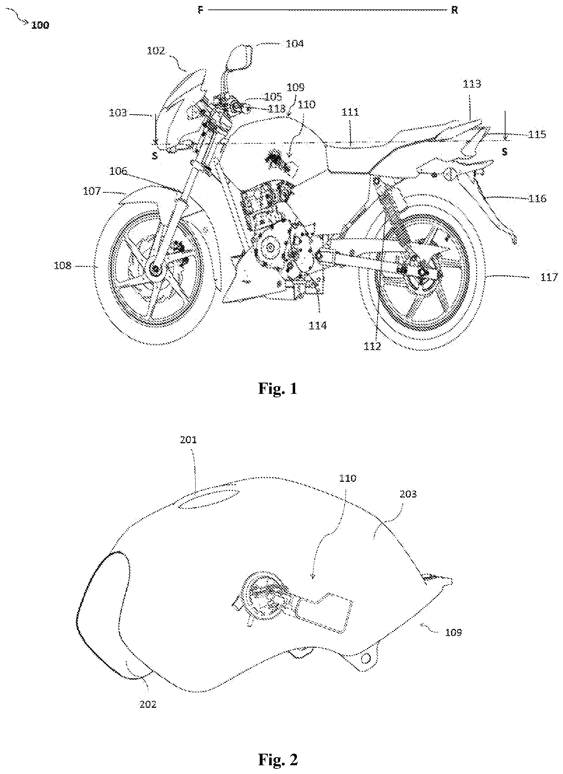

**Fig. 1** is a left side of the motorcycle type vehicle **(100)** (hereinafter 'the vehicle') illustrating the fuel pump module **(110)** mounted on the vehicle **(100)** or the fuel tank **(109).** According to one embodiment of the present invention, the vehicle **(100)** includes the body frame (not shown) schematically configured to mount the fuel tank **(109)** for disposing the fuel pump module **(110)** in fuel tank **(109).** In a front portion **(F)** of the vehicle **(100),** a steering shaft (not shown) is supported rotatable in a certain range. Further a handlebar **(105)** is rotatable integrally connected to the steering shaft for steering the vehicle **(100)** and is connected to a front wheel **(108)** through the steering shaft. A steering handle **(118)** is rotatable supported, independently of a front fork assembly **(106),** on a steering stem provided on the head tube (not shown) an upper portion of the front wheel is covered by a front fender **(107)** which prevents mud and water from getting deflected towards the steering shaft. The front wheel **(108)** is rotatably mounted on the front portion **(F)** thereof and a rear wheel **(117)** is rotatable mounted on a rear portion **(R)** thereof. Further, the front fork assembly **(106)** is mounted over the front fender **(107).** In a portion lying ahead of the front fork assembly **(106),** a lighting device for example as a headlamp **(103),** a pair of signaling devices such as turn signal lamps (not shown), a display device such as a speedometer (not shown) are housed by a holding structure (not shown) mounted thereto. The portion, lying at the backside of the vehicle **(100),** includes the tail lamp **(115),** a rear fender **(116)** which prevents the entry of mud and water from getting deflected and also increase the aesthetic appearance. An adjustable windscreen **(102)** is mounted to the front of the vehicle **(100).** A pair of rear view mirror **(104)** comprises a casing, the casing having a front mirror for reflecting the image of traffic approaching from behind. A shock absorber **(112)** is placed which gives better ride experience to the rider. A two legged stand (not shown) is used to support and hold the vehicle **(100).** The stand (not shown) moves on a pivot (not shown) to take up two positions, one folded up and the other on the ground.

Further in **Fig.1****,** in the front portion **(F)** of the vehicle **(100),** the fuel tank **(109)** is arranged immediately behind the head tube (not shown) and is disposed over an internal combustion engine **(114).** A seat assembly **(111)** is disposed immediately behind the fuel tank **(109).** A pillion **(113)** is disposed rearward of the seat assembly. Suspension systems are provided for comfortable steering of the vehicle on the road. The front fork assembly **(106)** forms the front suspension system and serves as a rigidity component. An internal combustion engine **(114)** is mounted to a front lower portion of the vehicle body frame by means of an engine mounting bracket (not shown). An internal combustion engine **(114)** is equipped with an exhaust system that includes an exhaust pipe (not shown) connected to the engine and a muffler (not shown) connected to the exhaust pipe. As per one embodiment of the present invention, the fuel pump module **(110)** is mounted to a side wall of the inner portion of the fuel tank **(109).**

**Fig.2** is a perspective view of the fuel tank in which according to one embodiment of the present invention, the opening **(201)** on the fuel tank **(109)** is shown and further fuel tank is divided into two parts viz. fuel tank inner portion **(202)** and fuel tank outer portion **(203)** in which the fuel pump module **(110)** is disposed to the left side wall of said fuel tank inner portion **(202)** through at least one mounting member.

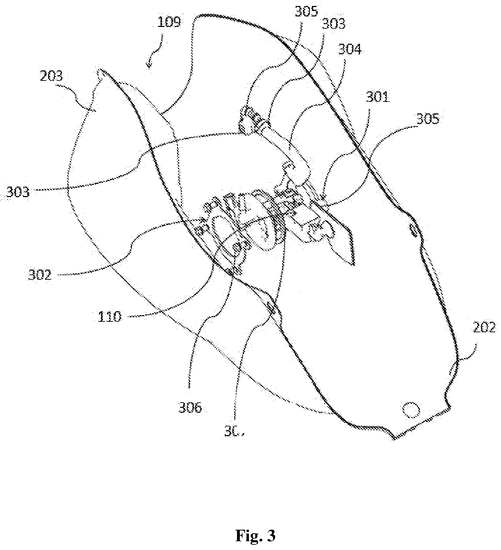

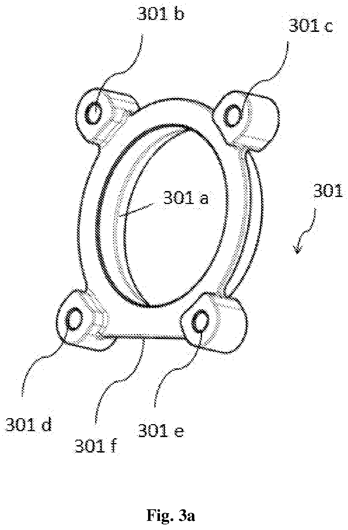

**Fig. 3** **is** the inverted view of the fuel tank, as per one embodiment of the present invention, the fuel tank **(109)** includes a mounting plate **(301),** a pressure plate **(302),** a quick connector **(303),** a fuel hose **(304),** fuel hose clamps **(305),** a fastener **(306)** and a fuel level sensor **(307)** to measure the fuel level in the fuel tank and a sealing member includes rubber seal (not shown). Further, as per one embodiment of the present invention, rubber seal is attached to the flange of the fuel pump module, the pressure plate **(302)** is arranged over the flange and fastened with the fasteners **(306)** to ensure the effective tightness of fuel pump module inside the fuel tank. Further, as per one embodiment of the present invention, the fuel pump module **(110)** is attached to the left side wall of said fuel tank inner portion **(202)** not directly but with the help of atleast a mounting plate **(301)** which has a flat surface **(301 f) (****Fig. 3a****),** with the help of the rubber seal to avoid leakage. Further, as per one embodiment of the present invention, the mounting plate **(301)** is attached to the side wall of fuel tank inner portion **(202)** from outside and have enough chamfering **(301 a) (****Fig. 3a****)** to enhance the ease of assembly. Further, as per one embodiment of the present invention, both pressure plate **(302)** and mounting plate **(301)** have a straight land and four mounting holes **(301 b, 301c, 301 d, 301 e)** in the same pattern to enhance easy assembly.

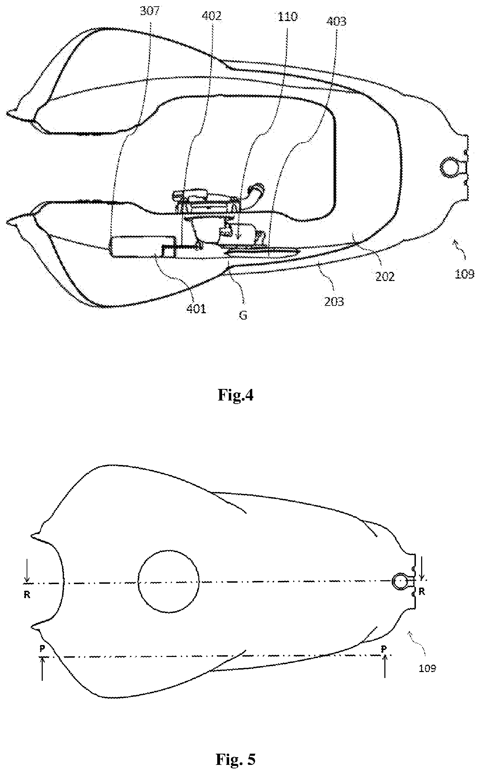

**Fig. 4****.** is the top view of the fuel tank, as per one embodiment of the present invention, the fuel level sensor **(307)** includes a float **(401),** a float arm **(402),** also fuel pump module **(110)** include a filter **(403)** where as per the invention the fuel pump module **(110)** is attached to the left side of the wall to the fuel tank inner portion **(202)** and on the right side of the fuel tank inner portion **(202)** a canister (not shown) is attached. Further, as per one embodiment of the present invention, the fuel level sensor **(307)** has a float **(401)** and float arms **(402)** which has a movement from fuel bottom portion to the top portion for sensing the fuel level, such that the front wider area of the fuel tank is used for packaging the fuel level sensor. Further, as per one embodiment of a present invention, the gap **G** between the fuel tank outer portion **(203)** and fuel tank inner portion **(202)** is not wide enough, to accommodate the fuel pump module easily, that is why fuel pump module has to be attached in some predetermined angle to the fuel tank inner portion.

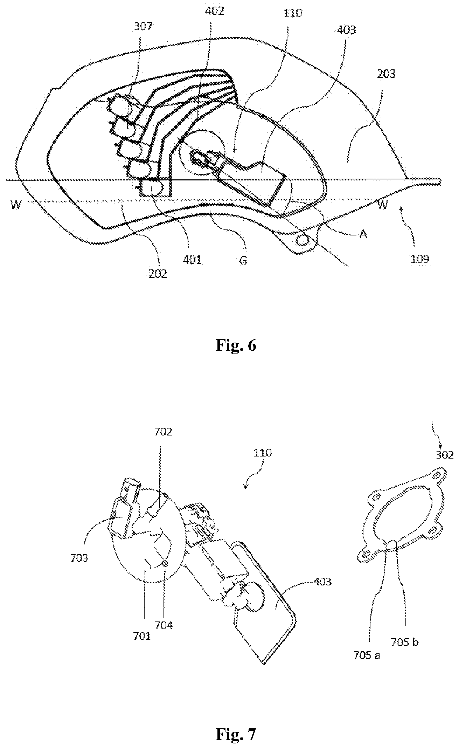

**Fig. 5** is the longitudinal axis view **(PP, RR)** of the fuel tank. Further **Fig. 6** is the longitudinal axis view **(PP)** of the fuel tank. As per one embodiment of the present invention, the fuel pump module **(110)** is packaged behind and below the float **(401)** and float arm **(402)** of the fuel level sensor **(307).** Moreover, this arrangement ensures the assembly and functioning of the fuel level sensor as, this will not restrict the movement of float **(401)** & float arm **(402)** inside the fuel tank **(109)** from top to bottom.

Further in **Fig. 6****,** referring to one embodiment of the present invention, the fuel tank **(109)** includes the fuel pump module **(110)** which is inclined towards horizontal plane at a predetermined range of an angle A. Further, as per one embodiment of the present invention, the angle A is in the range 20-40 degree with respect to the rear mounting of fuel tank as the gap G between the fuel tank inner portion **(202)** and fuel tank outer portion **(203)** is not enough wider to accommodate the fuel pump module in the rear left side of the fuel tank, so this projection angle helps in mounting of the fuel pump in the space provided behind the float **(401)** and float arm **(402)** of the fuel level sensor **(307).** Further, according to the present invention, the fuel pump modules **(110)** include a filter **(403),** which touches only the bottom surface of the fuel tank to suck the fuel at the lowest possible level **(WW)** thereby reducing the dead volume present in the fuel tank.

**Fig.7** is the perspective view of the fuel pump module, as per one embodiment of the present invention, the fuel pump module includes a flange **(701),** a fuel outlet port **(702),** an electric connector **(703),** a filter **(403)** and a pip **(704).** Further as per one embodiment of the present invention, said pressure plate **(302)** have grooves **(705a, 705b)** which, during the assembly, is matched with the pip **(704)** of the flange **(701)** and then fastened to the mounting plate **(301),** where the mounting plate **(301)** have enough chamfering **(301 a)** on inner circumference of the plate to enable ease of insertion and also to ensure the poka yoke assembly. Further according to this embodiment, the restriction of water entry to the electric connector is ensured because of the gravity, resulting in avoiding the short circuiting.

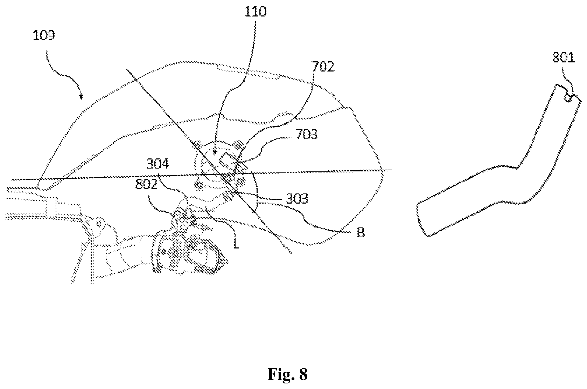

**Fig. 8** is the longitudinal axis view **(RR)** of the fuel tank, as per one embodiment of the present invention, the fuel pump module transfer fuel to the fuel outlet port **(702)** with predetermined pressure. Further, as per one embodiment of the present invention, the quick connector **(303)** is connected to the fuel outlet port and the fuel hose **(304)** is clamped by the hose clamps at the quick connector **(303)** end and fuel injector **(802)** end to ensure tightness to avoid leakage. Further, as per one embodiment, fuel hose **(304)** is connected between the fuel pump module **(110)** and fuel injector **(802)** to carry out the pressurized fuel to the fuel injector **(802).** Further, as per one embodiment of the present invention, the fuel outlet port **(702)** and the electric connector **(703)** face towards ground by forming an angle B. Further, as per one embodiment of the present invention, the angle B is in the range 50-70 degree with respect to the fuel tank **(109).** By this orientation it is feasible to have the shorter length L of the fuel hose which is in the range 6-12 times of the diameter of the fuel hose which actually protect the fuel hose from tilting or pinching phenomenon and also it makes feasible for operator to assemble wiring harness and hose assembly easily, for functioning of the fuel flow system and also holds significant economic benefits generated to the manufacturers by reducing requirements of the materials as used.

Further in **Fig. 8****,** as per one embodiment of the present invention, the said fuel hose has a small groove **(801)** at the injector end to match with conforming profile available at the fuel injector **(802).** This will ensure correct assembly & will not create any tilt or pinching of the fuel hose as tilting of fuel hose may cause disruption in the fuel flow system. Further, this orientation of fuel pump module **(110)** & fuel hose **(304)** routing enables the ease of assembly of fuel hose along with the quick connector to the fuel outlet port & conforming profile of the wiring harness to the electric connector respectively.

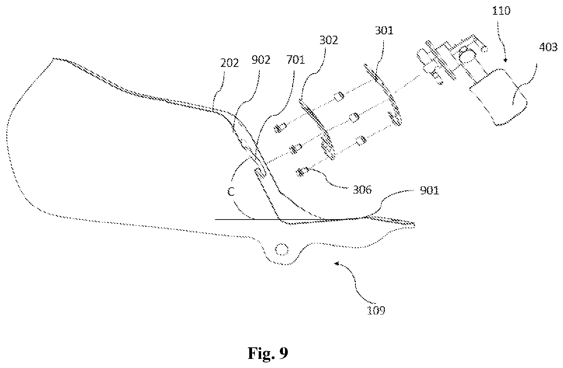

**Fig. 9** is a left hand side view of the fuel tank **(109),** as per another embodiment of the present invention, the fuel tank includes the fuel pump module **(110)** disposed in fuel tank inner portion **(202)** which includes at least a pressure plate **(302)** and a mounting plate **(301)** where the mounting plate **(301)** is attached to the fuel tank inner portion **(202).** Further, as per another embodiment of the present invention, the fuel pump module **(110)** includes the flange **(701)** to accommodate at least one sealing member includes rubber seal which ensure the sealing of the fuel pump module **(110)** with fuel tank inner portion **(202).** Moreover, the pressure plate **(302)** is arranged over the flange **(701)** and also, tightness of the fuel pump module **(110)** with the mounting plate by means of fasteners **(306)** is ensured, to avoid leakage. Further, as per another embodiment of the present invention, the fuel pump module **(110)** is mounted on the upward rising wall **(902)** with respect to the rear mounting of fuel tank **(901)** at predetermined angle C. Further, as per another embodiment of the present invention, the angle C is in the range 50-55 degree as to maintain the maximum fuel level in the tank and also to overcome the space constraint in the fuel tank.

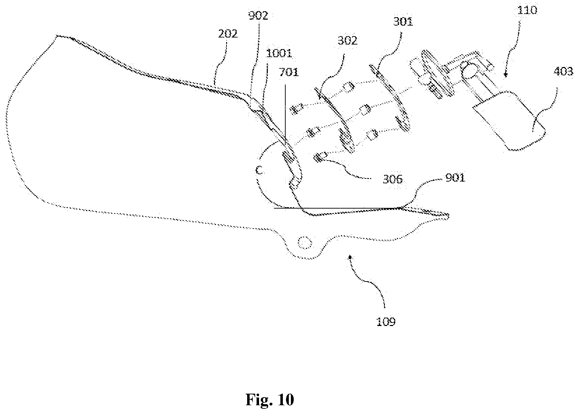

**Fig. 10** is a left hand side view of the fuel tank inner portion **(202),** as per another embodiment of the present invention, the fuel tank inner portion **(202)** includes the protrusion **(1001)** to accommodate the fuel pump away from frame tube and wiring harness, meaning thereby to achieve clearance with the interfacing of components as this embodiment is helpful where there exist the layout space constraints and also the chances of coinciding with the adjoining vehicle parts is more. Further, as per another embodiment of the present invention, the mounting plate **(301)** can be attached to either side of protrusion **(1001)** to ensure the tightness of the fuel pump module mounting to avoid leakage.

Further in **Fig. 10****,** according to the present invention, said fuel pump (110) include a filter **(403)** which is placed with respect to the rear mounting of fuel tank (901). This provides good suction of the fuel and also results to achieve dead volume.

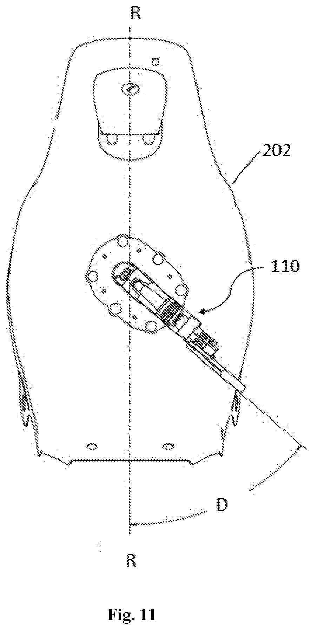

**Fig.11** is a longitudinal top view of fuel tank inner portion, as per another embodiment of the present invention, the fuel pump module is projected at an angle D. Further, as per another embodiment of the present invention, the angle D is in the range 45-50 degree with respect to longitudinal axis **(RR)** of the fuel tank inner portion **(202)** to overcome the problem of space constraint in the fuel tank and increase the suction of fuel present at the bottom surface of the fuel tank **(109).**

The embodiments explained in Fig. 6, Fig. 9 & Fig.10 of the present invention helps in overcoming the problem of space constraints, minimizing dead volume and also maintaining the fuel level as present in the fuel tank **(109)** and helps in the easy mounting of fuel pump module **(110)** in the fuel tank inner portion **(202).**

Advantageously, the embodiments of the present invention, describes the potential modifications in the mounting of fuel pump module to the left side wall and upward rising wall of the fuel tank inner portion of the saddle type vehicle. This facilitates the simple and easy mounting of the fuel pump module which can efficiently supply the fuel from the tank through the Electronic Fuel Injection (EFI) system.

**List of Reference Symbol:**

| | | | |
|---|---|---|---|
| Fig.1 | | Fig. 2 | |
| 100: | vehicle. | 201: | opening |
| 102: | windscreen | 202: | fuel tank inner portion |
| 103: | headlamp | 203: | fuel tank outer portion. |
| 104: | rear view mirror. | Fig.3 | |
| 105: | handlebar | 301: | mounting plate |
| 106: | front fork assembly | 301a: | chamfering |
| 107: | front fender | 301b, 301c, 301d, 301e: | mounting holes |
| 108: | front wheel | | |
| 109: | fuel tank | 301f: | machine flat surface, |
| 110: | fuel pump module | 302: | pressure plate |
| 111: | seat assembly | 303: | quick connector |
| 112: | shock absorber | 304: | fuel hose |
| 113: | pillion | 305: | fuel hose clamps |
| 114: | internal combustion engine | 306: | fasteners |
| 115: | tail lamp | 307: | fuel level sensor |
| 116: | rear fender | Fig. 4 | |
| 117: | rear wheel | 401: | float |
| 118: | steering handle | 402: | float arm |
| F: | front portion | 403: | filter |
| R: | rear Portion | | |
| Fig. 5 | | | |
| PP, RR: | Longitudinal Axis. | | |
| Fig. 6 | | | |
| WW: | lower level axis. | | |
| Fig. 7 | | | |
| 701: | flange | | |
| 702: | fuel outlet port | | |
| 703: | electric connector | | |
| 704: | pip | | |
| 705a, 705b: | grooves | | |
| Fig. 8 | | | |
| 801: | groove | | |
| 802: | fuel injector | | |
| Fig. 9 | | | |
| 901: | rear mounting of fuel pump | | |
| 902: | upward rising wall | | |
| Fig. 10 | | | |
| 1001: | protrusion | | |

## Claims

1. A saddle type vehicle (100), said saddle type vehicle (100) comprising:
a fuel tank (109), said fuel tank (109) being operatively mounted on at least a portion of said saddle type vehicle (100), said fuel tank (109) includes a fuel tank outer portion (203), a fuel tank inner portion (202) and a fuel level sensor (307);
a fuel pump module (110), said fuel pump module (110) for supplying fuel from said fuel tank (109) to a fuel injector (802) through a fuel hose (304), said fuel pump module (110) includes a flange (701), a filter (403), said filter (403) being capable of sucking the fuel present at a bottom surface of said fuel tank inner portion (202);
a mounting plate (301), said mounting plate (301) being adapted for mounting said fuel pump module (110) to at least one side of said fuel tank (109);
a pressure plate (302), said pressure plate (302) being attached to said flange (701) in said fuel pump module (110);
wherein said fuel pump module (110) is inclined with respect to the horizontal plane,
said filter (403) having multiple openings through which fuel from said fuel tank (109) flows from said fuel tank inner portion (202) to said fuel pump module (110), said filter (403) being mounted in said fuel tank (109),
and being **characterized by**
said fuel level sensor (307) being packaged in a front wider area of said fuel tank (109), wherein said fuel level sensor (307) has a float (401) and a float arm (402), said float arm being capable of a movement from a bottom portion of said fuel tank (109) to a top portion of said fuel tank (109) for sensing the fuel level;
wherein said filter (403) is projected towards said rear end of said fuel tank (109) for receiving the fuel from a bottom surface of said fuel tank inner portion (202),
wherein said filter (403) touches the bottom surface of said fuel tank (109) to suck the fuel at the lowest possible level (WW) in said fuel tank (109).

2. The saddle type vehicle (100) as claimed in claim 1, wherein said fuel pump module (110) includes an electric connector (703), a pip (704) and a fuel outlet port (702).

3. The saddle type vehicle (100) as claimed in claim 1, wherein said fuel pump module (110) is disposed to at least one side of said fuel tank inner portion (202).

4. The saddle type vehicle (100) as claimed in claim 3, wherein said at least one side of said fuel tank inner portion (202) includes a left side of wall of said fuel tank inner portion (202).

5. The saddle type vehicle (100) as claimed in claim 1, wherein said fuel pump module (110) is projected at a predetermined angle A with respect to the horizontal plane.

6. The saddle type vehicle (100) as claimed in claim 5, wherein said predetermined angle A is in a range of 20 - 40 degrees.

7. The saddle type vehicle (100) as claimed in claim 2, wherein said fuel outlet port (702) in said fuel pump module (110) is projected at a predetermined angle B with respect to said fuel tank (109) when viewed in a horizontal direction.

8. The saddle type vehicle (100) as claimed in claim 7, wherein said predetermined angle B is in a range of 50-70 degrees.

9. The saddle type vehicle (100) as claimed in claim 2, wherein said pip (704) is attached to at least a groove (705a, 705b) of said pressure plate (302).

10. The saddle type vehicle (100) as claimed in claim 1, wherein a length of said fuel hose (304) is equal to 6-12 times the diameter of said fuel hose (304).

11. The saddle type vehicle (100) as claimed in claim 10, wherein said fuel hose (304) includes a groove (801), said groove (801) being attached with a profile conforming to a profile of a fuel injector (802).

12. The saddle type vehicle (100) as claimed in claim 3, wherein said at least one side of said fuel tank inner portion (202) includes an upward rising wall (902) with respect to said rear end of said fuel tank (109).

13. The saddle type vehicle (100) as claimed in claim 1, wherein said fuel tank inner portion (202) includes a protrusion (1001), said protrusion (1001) being configured to attach said fuel tank inner portion (202) with said fuel pump module (110).

14. The saddle type vehicle (100) as claimed in claim 1, wherein said fuel pump module (110) is mounted on an upward rising wall (902) with respect to said rear end of said fuel tank (109) at the horizontal plane at a predetermined angle C.

15. The saddle type vehicle (100) as claimed in claim 14, wherein said predetermined angle C is in a range of 50-55 degrees.

16. The saddle type vehicle (100) as claimed in claim 1, wherein said fuel pump module (110) is projected at a predetermined angle D with respect to a longitudinal axis (RR) of said fuel tank inner portion (202).

17. The saddle type vehicle (100) as claimed in claim 16, wherein said predetermined angle D is in a range of 45-50 degrees.

## Patentansprüche

1. Fahrzeug (100) vom Satteltyp, wobei das Fahrzeug (100) aufweist:
einen Kraftstofftank (109), wobei der Kraftstofftank (109) betriebsmäßig an zumindest einem Teil des Fahrzeugs vom Satteltyp (100) angebracht ist, wobei der Kraftstofftank (109) einen Kraftstofftank-Außenbereich (203), einen Kraftstofftank-Innenbereich (202) und einen Kraftstoffstandsensor (307) umfasst;
ein Kraftstoffpumpenmodul (110), wobei das Kraftstoffpumpenmodul (110) dazu vorgesehen ist, Kraftstoff aus dem Kraftstofftank (109) durch einen Kraftstoffschlauch (304) zu einer Kraftstoffeinspritzdüse (802) zu fördern, wobei das Kraftstoffpumpenmodul (110) einen Flansch (701), einen Filter (403) beinhaltet, wobei der Filter (403) fähig ist, den an einer Bodenfläche des Kraftstofftank-Innenbereichs (202) vorhandenen Kraftstoff anzusaugen;
eine Montageplatte (301), wobei die Montageplatte (301) zum Befestigen des Kraftstoffpumpenmoduls (110) an zumindest einer Seite des Kraftstofftanks (109) eingerichtet ist;
eine Druckplatte (302), wobei die Druckplatte (302) an dem Flansch (701) in dem Kraftstoffpumpenmodul (110) angebracht ist;
wobei das Kraftstoffpumpenmodul (110) in Bezug auf die horizontale Ebene geneigt ist,
wobei der Filter (403) mehrere Öffnungen aufweist, durch die Kraftstoff aus dem Kraftstofftank (109) vom Kraftstofftank-Innenbereich (202) zum Kraftstoffpumpenmodul (110) fließt, wobei der Filter (403) im Kraftstofftank (109) befestigt ist,
und **dadurch gekennzeichnet, dass**
der Kraftstoffstandsensor (307) in einem vorderen, breiteren Bereich des Kraftstofftanks (109) untergebracht ist, wobei der Kraftstoffstandsensor (307) einen Schwimmer (401) und einen Schwimmerarm (402) hat, wobei der Schwimmerarm von einem Bodenbereich des Kraftstofftanks (109) zu einem Kopfbereich des Kraftstofftanks (109) zum Erkennen des Kraftstoffstands beweglich ist;
wobei der Filter (403) zum hinteren Ende des Kraftstofftanks (109) hin für das Aufnehmen des Kraftstoffs von einer Bodenfläche des Kraftstofftank-Innenbereich (202) vorsteht,
wobei der Filter (403) die Bodenfläche des Kraftstofftanks (109) berührt, um den Kraftstoff auf dem tiefstmöglichen Stand (WW) im Kraftstofftank (109) anzusaugen.

2. Fahrzeug vom Satteltyp (100) nach Anspruch 1, wobei das Kraftstoffpumpenmodul (110) ein elektrisches Anschlussstück (703), einen Höcker (704) und einen Kraftstoffauslass (702) aufweist.

3. Fahrzeug vom Satteltyp (100) nach Anspruch 1, wobei das Kraftstoffpumpenmodul (110) an zumindest einer Seite des Kraftstofftank-Innenbereichs (202) befindlich ist.

4. Fahrzeug vom Satteltyp (100) nach Anspruch 3, wobei die zumindest eine Seite des Kraftstofftank-Innenbereichs (202) eine linke Seitenwand des Kraftstofftank-Innenbereichs (202) beinhaltet.

5. Fahrzeug vom Satteltyp (100) nach Anspruch 1, wobei das Kraftstoffpumpenmodul (110) in einem vorbestimmten Winkel A zur Horizontalebene vorsteht.

6. Fahrzeug vom Satteltyp (100) nach Anspruch 5, wobei der vorbestimmte Winkel A in einem Bereich von 20° bis 40° liegt.

7. Fahrzeug vom Satteltyp (100) nach Anspruch 2, wobei die Kraftstoffauslassöffnung (702) in dem Kraftstoffpumpenmodul (110) in horizontaler Richtung gesehen in einem vorbestimmten Winkel B in Bezug auf den Kraftstofftank (109) vorsteht.

8. Fahrzeug vom Satteltyp (100) nach Anspruch 7, wobei der vorbestimmte Winkel B in einem Bereich von 50° bis 70° liegt.

9. Fahrzeug vom Satteltyp (100) nach Anspruch 2, wobei der Höcker (704) an zumindest einer Vertiefung (705a, 705b) der Druckplatte (302) angebracht ist.

10. Fahrzeug vom Satteltyp (100) nach Anspruch 1, wobei eine Länge des Kraftstoffschlauchs (304) dem 6- bis 12-fachen des Durchmessers des Kraftstoffschlauchs (304) entspricht.

11. Fahrzeug vom Satteltyp (100) nach Anspruch 10, wobei der Kraftstoffschlauch (304) eine Vertiefung (801) hat, wobei die Vertiefung (801) mit einem Profil versehen ist, das dem Profil eines Kraftstoffinjektors (802) formmäßig entspricht.

12. Fahrzeug vom Satteltyp (100) nach Anspruch 3, wobei die zumindest eine Seite des Kraftstofftank-Innenbereichs (202) eine in Bezug auf das hintere Ende des Kraftstofftanks (109) nach oben ansteigende Wand (902) aufweist.

13. Fahrzeug vom Satteltyp (100) nach Anspruch 1, wobei der Kraftstofftank-Innenbereich (202) einen Vorsprung (1001) aufweist, wobei der Vorsprung (1001) dazu eingerichtet ist, den Kraftstofftank-Innenbereich (202) mit dem Kraftstoffpumpenmodul (110) zu verbinden.

14. Fahrzeug vom Satteltyp (100) nach Anspruch 1, wobei das Kraftstoffpumpenmodul (110) an einer sich in Bezug auf das hintere Ende des Kraftstofftanks (109) in der horizontalen Ebene nach oben erstreckenden Wand (902) in einem vorbestimmten Winkel C befestigt ist.

15. Fahrzeug vom Satteltyp (100) nach Anspruch 14, wobei der vorbestimmte Winkel C in einem Bereich von 50° bis 55° liegt.

16. Fahrzeug vom Satteltyp (100) nach Anspruch 1, wobei das Kraftstoffpumpenmodul (110) in einem vorbestimmten Winkel D in Bezug auf eine Längsachse (RR) des Kraftstofftank-Innenbereichs (202) vorsteht.

17. Fahrzeug vom Satteltyp (100) nach Anspruch 16, wobei der vorbestimmte Winkel D in einem Bereich von 45° bis 50° liegt.

## Revendications

1. Véhicule de type selle (100), ledit véhicule de type selle (100) comprenant :
un réservoir de carburant (109), ledit réservoir de carburant (109) étant monté de manière opérationnelle sur au moins une partie dudit véhicule de type selle (100), ledit réservoir de carburant (109) comprenant une partie extérieure (203), une partie intérieure (202) et un capteur de niveau de carburant (307) ;
un module de pompe à carburant (110), ledit module de pompe à carburant (110) étant destiné à fournir du carburant depuis ledit réservoir de carburant (109) vers un injecteur de carburant (802) par un tuyau de carburant (304), ledit module de pompe à carburant (110) comprenant une bride (701), un filtre (403), ledit filtre (403) étant capable d'aspirer le carburant présent au niveau d'une surface inférieure de ladite partie intérieure du réservoir de carburant (202) ;
une plaque de montage (301), ladite plaque de montage (301) étant adaptée pour monter ledit module de pompe à carburant (110) sur au moins un côté dudit réservoir de carburant (109) ;
une plaque de pression (302), ladite plaque de pression (302) étant fixée à ladite bride (701) dans ledit module de pompe à carburant (110) ;
ledit module de pompe à carburant (110) étant incliné par rapport au plan horizontal,
ledit filtre (403) ayant de multiples ouvertures à travers lesquelles le carburant provenant dudit réservoir de carburant (109) s'écoule depuis ladite partie intérieure du réservoir de carburant (202) vers ledit module de pompe à carburant (110), ledit filtre (403) étant monté dans ledit réservoir de carburant (109),
et **caractérisé en ce que**
ledit capteur de niveau de carburant (307) est logé dans une zone avant élargie dudit réservoir de carburant (109), ledit capteur de niveau de carburant (307) comportant un flotteur (401) et un bras de flotteur (402), ledit bras de flotteur étant capable de se déplacer d'une partie inférieure dudit réservoir de carburant (109) vers une partie supérieure dudit réservoir de carburant (109) afin de détecter le niveau de carburant ;
ledit filtre (403) faisant saillie vers ladite extrémité arrière dudit réservoir de carburant (109) pour recevoir le carburant provenant d'une surface inférieure de ladite partie interne (202) du réservoir de carburant,
ledit filtre (403) touchant la surface inférieure dudit réservoir de carburant (109) afin d'aspirer le carburant au niveau le plus bas possible (WW) dans ledit réservoir de carburant (109),

2. Véhicule de type selle (100) selon la revendication 1, dans lequel ledit module de pompe à carburant (110) inclut un connecteur électrique (703), un raccord (704) et un orifice de sortie de carburant (702).

3. Véhicule de type selle (100) selon la revendication 1, dans lequel ledit module de pompe à carburant (110) est disposé sur au moins un côté de ladite partie intérieure du réservoir de carburant (202).

4. Véhicule de type selle (100) selon la revendication 3, dans lequel ledit au moins un côté de ladite partie intérieure du réservoir de carburant (202) comprend un côté gauche de paroi de ladite partie intérieure du réservoir de carburant (202).

5. Véhicule de type selle (100) selon la revendication 1, dans lequel ledit module de pompe à carburant (110) fait saillie selon un angle prédéterminé A par rapport au plan horizontal.

6. Véhicule de type selle (100) selon la revendication 5, dans lequel ledit angle prédéterminé A est compris entre 20 et 40 degrés.

7. Véhicule de type selle (100) selon la revendication 2, dans lequel ledit orifice de sortie de carburant (702) dans ledit module de pompe à carburant (110) fait saillie selon un angle prédéterminé B par rapport audit réservoir de carburant (109) lorsqu'on le regarde dans une direction horizontale.

8. Véhicule de type selle (100) selon la revendication 7, dans lequel ledit angle prédéterminé B est compris dans une plage de 50 à 70 degrés.

9. Véhicule de type selle (100) selon la revendication 2, dans lequel ledit raccord (704) est fixé à au moins une rainure (705a, 705b) de ladite plaque de pression (302).

10. Véhicule de type selle (100) selon la revendication 1, dans lequel la longueur dudit tuyau de carburant (304) est égale à 6 à 12 fois le diamètre dudit tuyau de carburant (304).

11. Véhicule de type selle (100) selon la revendication 10, dans lequel ledit tuyau de carburant (304) comprend une rainure (801), ladite rainure (801) étant fixée avec un profil conforme au profil d'un injecteur de carburant (802).

12. Véhicule de type selle (100) selon la revendication 3, dans lequel ledit au moins un côté de ladite partie intérieure du réservoir de carburant (202) inclut une paroi s'élevant vers le haut (902) par rapport à ladite extrémité arrière dudit réservoir de carburant (109).

13. Véhicule de type selle (100) selon la revendication 1, dans lequel ladite partie intérieure du réservoir de carburant (202) comprend une saillie (1001), ladite saillie (1001) étant configurée pour fixer ladite partie intérieure du réservoir de carburant (202) audit module de pompe à carburant (110).

14. Véhicule de type selle (100) selon la revendication 1, dans lequel ledit module de pompe à carburant (110) est monté sur une paroi ascendante (902) par rapport à ladite extrémité arrière dudit réservoir de carburant (109) dans le plan horizontal selon un angle prédéterminé C.

15. Véhicule de type selle (100) selon la revendication 14, dans lequel ledit angle prédéterminé C est compris dans une plage de 50 à 55 degrés.

16. Véhicule de type selle (100) selon la revendication 1, dans lequel ledit module de pompe à carburant (110) fait saillie selon un angle prédéterminé D par rapport à un axe longitudinal (RR) de ladite partie intérieure du réservoir de carburant (202).

17. Véhicule de type selle (100) selon la revendication 16, dans lequel ledit angle prédéterminé D est compris entre 45 et 50 degrés.
